# EUROPÄISCHE PATENTSCHRIFT

(11) **EP 3 788 239 B1**
(45) Veröffentlichungstag und Bekanntmachung des Hinweises auf die Patenterteilung: **03.07.2024**
(21) Anmeldenummer: 19723049.3
(22) Anmeldetag: 02.05.2019
(51) Int. Cl.: F01M 11/00, F16N 19/00

(54) **WANNENEINRICHTUNG MIT ROHREINHEIT**
PAN WITH TUBE
BASSINE AVEC TUYAU

(30) Priorität: 04.05.2018 DE 102018110790
(43) Veröffentlichungstag der Anmeldung: 10.03.2021
(73) Patentinhaber: ElringKlinger AG, 72581 Dettingen (DE)
(72) Erfinder: FRANZ, Ralf, 72574 Bad Urach (DE); SAILE, Marco, 72793 Pfullingen (DE)
(74) Vertreter: Pfiz/Gauss Patentanwälte PartmbB
(86) Internationale Anmeldenummer: PCT/EP2019/061268
(87) Internationale Veröffentlichungsnummer: WO 2019/211388

(56) Entgegenhaltungen:
- DE-A1-102014 019 425
- DE-A1-102014 104 688
- JP-A- S6 365 112
- JP-A- 2017 061 894
- US-A1- 2010 300 395

## Beschreibung

Die Erfindung betrifft eine Wanneneinrichtung umfassend einen Wannenkörper mit einer einen Rohrkörper umfassenden Rohreinheit, wobei der Wannenkörper ein spritzgegossenes Kunststoffteil ist.

Insbesondere ist die Wanneneinrichtung zur Bevorratung von Öl für eine Ölversorgung vorgesehen. Insbesondere ist die Wanneneinrichtung als Motorölwanne für einen Verbrennungsmotor, insbesondere eines Nutzfahrzeuges, vorgesehen.

Dabei ist insbesondere die Rohreinheit mit dem Rohrkörper in einem montierten Zustand Teil einer Ölleitung, welche beispielsweise zu einem Verbrennungsmotor und/oder einer Ölpumpe führt. Typischerweise ist die Rohreinheit für die Entnahme des Öles und zur Bereitstellung von Öl für die Ölleitung vorgesehen, wobei der Rohrkörper insbesondere ein Saugrohr ausbildet.

Beispielsweise weist die Rohreinheit an einem Ende des Rohrkörpers, welches insbesondere bei einem ordnungsgemäßen Gebrauch in das bevorratete Öl eintaucht und für die Entnahme des Öles vorgesehen ist, ein Ansaugteil mit einem Sieb auf. Bei einem Durchströmen des Öls durch das Sieb, insbesondere bei einem Absaugen des Öls, fängt das Sieb groben Schmutz auf und verhindert so in günstiger Weise, dass die Schmutzteile in die Ölleitung gelangen.

Derartige Wanneneinrichtungen sind beispielsweise aus der DE 10 2004 024 517 A1 und aus der WO 2013/117533 A1 bekannt.

In der DE 10 2014 104 688 A1 wird eine Fluidwannenvorrichtung offenbart, bei welcher ein rohrförmiges Führungselement bezüglich einer Verbindungsrichtung relativ zu einem Wannenelement fixiert ist.

Der Erfindung liegt die Aufgabe zugrunde, gattungsgemäße Wanneneinrichtungen zu verbessern, insbesondere diese kostengünstiger herzustellen und/oder deren Montage und/oder die Wartung derselben zu erleichtern.

Erfindungsgemäß wird diese Aufgabe durch eine Wanneneinrichtung gemäß Anspruch 1 gelöst. Weitere vorteilhafte Weiterentwicklungen sind in den abhängigen Ansprüchen definiert.

Einer der Vorteile der Erfindung ist dabei darin zu sehen, dass die Rohreinheit mit Spiel angeordnet ist und dadurch eines der Enden der Rohreinheit, welches bei der Montage mit einer Fluidleitung, insbesondere einer Ölleitung, verbunden werden soll, durch das Spiel passend zur Positionierung eines Anschlusses der Fluidleitung positioniert werden kann.

Hierdurch können in günstiger Weise die Rohreinheit und der Anschluss der Fluidleitung durch das passgenaue Positionieren derselben einfacher und bezüglich der Abdichtung zuverlässiger aneinander montiert werden.

Insbesondere wird eine vorgesehene Abdichtung an einem Ende der Rohreinheit verbessert, da diese sich durch das Spiel frei im Dichtsitz zentrieren kann.

Außerdem können durch das Spiel fertigungsbedingte Ungenauigkeiten an der Rohreinheit und/oder dem Ölleitungsanschluss leicht ausgeglichen werden und somit können Bauteiltoleranzen größer ausgelegt werden, wodurch die Herstellung derselben kostengünstiger erfolgen kann.

Dies ist insbesondere hinsichtlich des spritzgegossenen Wannenkörpers von Bedeutung, da beim Spritzgussverfahren die zu beachtenden Bauteiltoleranzen groß sind.

Insbesondere wird durch die Anordnung der Rohreinheit mit Spiel eine Überbestimmtheit in der Relativlage der Rohreinheit zu dem Anschluss der Fluidleitung, insbesondere unter Berücksichtigung einer Position eines Montierflansches der Wanneneinrichtung, welcher ebenso bei der Montage passgenau positioniert werden muss, vermieden.

Damit können die Vorteile, welche ein spritzgegossener Wannenkörper aus Kunststoff hat, beispielsweise seine kostengünstige Herstellung, ausgenützt werden und zugleich ist eine einfache Montage der Wanneneinrichtung ermöglicht.

Zusätzlich ist in günstiger Weise durch die Anordnung an den Wannenkörper die Rohreinheit verliersicher an den Wannenkörper adaptiert.

Insbesondere ist eine Sollposition für die Rohreinheit vorgesehen und die Rohreinheit ist mit Spiel in dieser Sollposition angeordnet, insbesondere wird die Rohreinheit mit Spiel in dieser Sollposition gehalten.

Typischerweise weist der Wannenkörper eine Vertiefungsrichtung auf. Dabei umfasst insbesondere der Wannenkörper einen Wannenraum, welcher sich ausgehend von einer Wannenöffnung in Richtung der Vertiefungsrichtung in den Wannenkörper hineinerstreckt. Dabei bildet insbesondere der Wannenraum einen Raum für die Bevorratung mit Öl.

Insbesondere ist die Vertiefungsrichtung zumindest näherungsweise parallel zu einer Entnahmerichtung.

Die Entnahmerichtung ist jene Richtung, in welcher der spritzgegossene Wannenkörper bei der Herstellung aus der entsprechenden Form entnommen wird.

Die Entnahmerichtung wird in der Spritzgusstechnik auch oftmals als Entformungsrichtung oder als Auf-Zu-Richtung des Spritzguss-Werkzeugs bezeichnet.

Vorzugsweise verläuft die Vertiefungsrichtung bei einem ordnungsgemäßen Gebrauch der Wanneneinrichtung zumindest näherungsweise parallel zur Schwerkraftrichtung.

Dabei ist voranstehend und nachfolgend unter der Formulierung "zumindest näherungsweise" zu verstehen, dass technisch irrelevante Abweichungen von dem genannten Wert mit umfasst sind. Beispielsweise sind Abweichungen von dem genannten Wert von bis zu ± 20 %, vorzugsweise von ± 10 %, in günstiger Weise von bis zu ± 5 %, des genannten Wertes mit umfasst. Bei einer zumindest näherungsweisen parallelen Ausrichtung zweier Richtungen sind insbesondere Richtungen, welche einen Winkel von bis zu 20°, vorzugsweise von bis zu 10°, insbesondere von bis zu 5° miteinander einschließen, ebenfalls als zumindest näherungsweise parallel zu verstehen.

Erfindungsgemäß ist vorgesehen, dass die Rohreinheit zumindest teilweise in Richtung der Vertiefungsrichtung mit Spiel angeordnet ist, insbesondere gehalten wird.

Dies ermöglicht insbesondere eine günstige Montage, da die Rohreinheit, insbesondere eine Öffnung des Rohrkörpers, passgenau in Richtung der Vertiefungsrichtung zum Anschluss der Ölleitung ausgerichtet werden kann.

Bei einigen Ausführungsformen ist vorgesehen, dass im Wesentlichen die gesamte Rohreinheit zumindest näherungsweise in Richtung der Vertiefungsrichtung mit Spiel angeordnet ist.

Bei besonders vorteilhaften Ausführungsformen ist vorgesehen, dass das Ende der Rohreinheit, welches für den Anschluss zur Fluidleitung vorgesehen ist, zumindest näherungsweise in Richtung der Vertiefungsrichtung mit Spiel angeordnet ist.

Bei einigen Ausführungsformen ist vorgesehen, dass ebenso das andere Ende der Rohreinheit, welche insbesondere in das bevorratete Öl eintaucht, um beispielsweise das bevorratete Öl abzusaugen, zumindest näherungsweise in Richtung der Vertiefungsrichtung mit Spiel angeordnet ist.

Bei anderen besonders vorteilhaften Ausführungsformen ist vorgesehen, dass dieses andere Ende zumindest näherungsweise in Richtung der Vertiefungsrichtung im Wesentlichen ohne Spiel angeordnet ist. Dies bietet beispielsweise den Vorteil, dass die Rohreinheit zumindest teilweise fest an der Wanneneinrichtung angeordnet ist und beispielsweise Abnutzungserscheinungen durch ein zu großes Wackeln der Rohreinheit in ihrem erlaubten Spiel vermindert werden.

Außerdem kann dabei in vorteilhafter Weise dieses Ende des Rohrkörpers nahe des Bodens fest angeordnet werden, so dass einerseits auch bei sehr geringen Ölfüllständen das Ende noch in das Öl eintaucht aber andererseits das Ende von dem Boden beabstandet bleibt, so dass eine fluidführende Verbindung noch offenbleibt.

Ferner ist bei einigen Ausführungsformen vorgesehen, dass ein Mittelabschnitt der Rohreinheit zwischen den beiden Enden des Rohrkörpers zumindest näherungsweise in Richtung der Vertiefungsrichtung mit Spiel angeordnet ist.

Wiederum andere Ausführungsformen sehen vor, dass der Mittelabschnitt im Wesentlichen ohne Spiel angeordnet ist.

Besonders günstig ist es, wenn die Rohreinheit zumindest teilweise in zumindest einer Richtung, insbesondere in mehrere Richtungen, welche zumindest näherungsweise senkrecht zu der Vertiefungsrichtung verläuft/verlaufen, mit Spiel angeordnet ist, insbesondere gehalten wird.

Insbesondere ist das eine Ende der Rohreinheit, welches für den Anschluss an die Fluidleitung vorgesehen ist, in zumindest einer, vorzugsweise mehreren, zumindest näherungsweise senkrecht zu der Vertiefungsrichtung verlaufenden Richtung/Richtungen mit Spiel angeordnet, insbesondere gehalten. Dadurch kann dieses Ende in besonders günstiger Weise zu dem Anschluss der Fluidleitung zentriert werden, wodurch zum einen die Montage erleichtert wird und zum anderen die Abdichtung an dieser Stelle durch das passgenaue Ineinandergreifen der Teile verbessert wird.

Bei einer besonders günstigen Ausführungsform ist vorgesehen, dass das andere Ende der Rohreinheit, welches insbesondere beim Gebrauch in das Öl eintaucht, in zumindest einer, beispielsweise in mehrere, zu der Vertiefungsrichtung zumindest näherungsweise senkrecht verlaufenden Richtung/Richtungen mit Spiel angeordnet ist, insbesondere gehalten wird.

Dadurch wird beispielsweise erreicht, dass dieses Ende in seinem Spiel etwas wackeln kann und so in dem Sieb sich verhangene Schmutzteilchen lösen können und damit das Sieb weniger schnell verstopft wird.

Bei anderen günstigen Ausführungsformen ist vorgesehen, dass dieses andere Ende der Rohreinheit im Wesentlichen ohne Spiel in zu der Vertiefungsrichtung zumindest näherungsweise senkrecht verlaufender Richtung gehalten wird, damit dieses in günstiger Weise fest angeordnet ist.

Voranstehend und nachfolgend wird unter einer Anordnung mit Spiel, insbesondere einem Halten mit Spiel, insbesondere verstanden, dass die Rohreinheit in einem das fertigungsbedingte Ausmaß übersteigenden Rahmen beweglich angeordnet ist oder in diesem Rahmen gehalten wird, und wobei dieser Rahmen im Wesentlichen, beispielsweise bis auf das fertigungsbedingte Ausmaß genau, vordefiniert ist.

Insbesondere ist vorgesehen, dass eine Auslenkung der Rohreinheit in einem vordefinierten Rahmen, welcher das fertigungsbedingte Ausmaß übersteigt, ermöglicht ist.

Beispielsweise ist das Ausmaß des Spiels, insbesondere das Ausmaß der erlaubten Auslenkung aus der Sollposition, höchstens ± 10 mm, insbesondere höchstens ± 5 mm, vorzugsweise höchstens ± 1 mm, beispielsweise höchstens ± 0,5 mm.

Insbesondere ist vorgesehen, dass das Ausmaß des Spiels, insbesondere das Ausmaß der erlaubten Auslenkung aus der Sollposition mindestens 0,005 mm, insbesondere mindestens ± 0,01 mm, vorzugsweise mindestens ± 0,05 mm, beträgt.

Beispielsweise ist bei einigen Ausführungsformen vorgesehen, dass das erlaubte Spiel nur in eine Richtung aus der Sollposition gegeben ist.

Typischerweise ist bei vorteilhaften Ausführungsformen vorgesehen, dass das Spiel beidseits in einer Richtung aus der Sollposition heraus gegeben ist.

Hinsichtlich weiterer konstruktiver Merkmale oder Elemente der Anordnung der Rohreinheit an den Wannenkörper wurden bislang keine näheren Angaben gemacht.

Beispielsweise umfasst die Wanneneinrichtung hierfür eine Halteeinrichtung, wobei insbesondere die Rohreinheit mittels der Halteeinrichtung mit Spiel an den Wannenkörper angeordnet ist, insbesondere die Halteeinrichtung die Rohreinheit mit Spiel hält.

Dadurch wird in einfacher Weise eine Anordnung der Rohreinheit mit Spiel ermöglicht, wobei andererseits die Halteeinrichtung vorzugsweise die Rohreinheit verliersicher und funktionsfähig an den Wannenkörper anordnet.

Außerdem wird in günstiger Weise erreicht, dass die Rohreinheit trotz des Spiels gehalten wird und somit nicht durch ein loses Liegen in einem Wannenraum des Wannenkörpers übermäßig abgenutzt oder sogar beschädigt wird.

Insbesondere ist die Rohreinheit wieder lösbar an den Wannenkörper angeordnet. Dabei ist es besonders günstig, dass die Rohreinheit während des Gebrauchs an den Wannenkörper angeordnet ist und die Wanneneinrichtung ordnungsgemäß funktionieren kann und für die Wartung die Rohreinheit von dem Wannenkörper wieder gelöst werden kann ohne dass eine Beschädigung derselben erfolgt. Beispielsweise ist so in einfacher Weise die Rohreinheit selbst oder ein Sieb der Rohreinheit leicht auswechselbar.

Bei besonders bevorzugten Ausführungsformen ist vorgesehen, dass die Haltereinrichtung die Rohreinheit wieder lösbar hält.

Insbesondere umfasst die Halteeinrichtung mindestens oder genau ein Halteelement, vorzugsweise mehrere Halteelemente. Insbesondere ist dabei vorgesehen, dass das genau eine oder zumindest eine Halteelement oder einige, insbesondere sämtliche, der mehreren Halteelemente eines oder mehrere der nachstehend erläuterten Merkmale umfasst/umfassen.

Insbesondere ist vorgesehen, dass die Halteeinrichtung mehrere Begrenzungsflächen aufweist und dass die Rohreinheit zwischen diesen Begrenzungsflächen mit Spiel angeordnet ist. Damit ist in konstruktiv einfacher Weise eine Begrenzung des Spiels durch eine jeweilige Begrenzungsfläche gegeben und durch die Ausgestaltung der Begrenzungsflächen kann in einfacher Weise das Ausmaß und die Richtung des erlaubten Spiels definiert werden.

Vorzugsweise ist die Rohreinheit zwischen jeweils zwei Begrenzungsflächen mit Spiel angeordnet, so dass in der entsprechenden Richtung, in welcher die Rohreinheit zwischen den zwei Begrenzungsflächen angeordnet ist beidseitig in definierter Weise das Spiel begrenzt ist.

Insbesondere sind dabei die zwei Begrenzungsflächen mit einem Abstand voneinander beabstandet, welcher zumindest näherungsweise um das Ausmaß des erlaubten Spiels größer ist als eine Ausdehnung des Teils der Rohreinheit, welches zwischen den zwei Begrenzungsflächen angeordnet ist und wobei die Ausdehnung in der Richtung gemessen wird, welche von der einen zu der anderen der zwei Begrenzungsflächen verläuft.

Insbesondere weist die Rohreinheit zu zumindest einer Begrenzungsfläche, insbesondere zu jeweils jeder der mehreren Begrenzungsflächen, eine korrespondierende Anschlagsfläche auf.

Vorzugsweise weist zumindest eine Begrenzungsfläche und/oder zumindest eine Anschlagsfläche, insbesondere jede der Begrenzungsflächen und Anschlagsflächen, eines oder mehrere der nachfolgend erläuterten Merkmale auf.

Dabei sind die Begrenzungsfläche und ihre korrespondierende Anschlagsfläche insbesondere derart ausgelegt, dass diese sich im Wesentlichen nicht berühren, so lange die Rohreinheit im erlaubten Spiel liegt und die Anschlagsfläche an die Begrenzungsfläche anschlägt, sobald die Positionierung der Rohreinheit an eine Grenze des erlaubten Ausmaßes des Spiels erreicht.

Damit wird in einfacher Weise ein Rahmen für das erlaubte Spiel durch die Begrenzungsflächen gegeben.

Typischerweise nimmt eine Anschlagsfläche der Rohreinheit eine Solllage ein, wenn die Rohreinheit in der Sollposition positioniert ist.

In vorteilhafter Weise sind die Begrenzungsflächen von der Solllage einer jeweiligen korrespondierenden Anschlagsfläche mit einem jeweiligen Abstand beabstandet angeordnet. Dadurch wird der Rohreinheit ein Spiel um die Sollposition herum gegeben.

Insbesondere entspricht der jeweilige Abstand der Begrenzungsfläche von der Solllage der korrespondierenden Anschlagsfläche einer entsprechenden maximal erlaubten Auslenkung der Rohreinheit aus der Sollposition, wobei insbesondere die erlaubte Auslenkung auf den Bereich der Anschlagsfläche und in Richtung zu der Begrenzungsfläche hin bezogen ist.

Beispielsweise weist der Rohrkörper selbst eine oder mehrere Anschlagsflächen auf.

Bei bevorzugten Ausführungsformen ist vorgesehen, dass die Rohreinheit zumindest ein oder genau ein Anordnungselement, insbesondere mehrere Anordnungselemente, umfasst. Vorzugsweise weist das eine Anordnungselement oder einige, insbesondere sämtliche, der mehreren Anordnungselemente eines oder mehrere der nachstehend erläuterten Merkmale auf.

Insbesondere ist das Anordnungselement zur Anordnung der Rohreinheit an den Wannenkörper vorgesehen.

Hierzu ist es vorteilhaft, wenn das Anordnungselement an einer Außenseite des Rohrkörpers angeordnet ist.

Dabei könnte das Anordnungselement an den Rohrkörper anmontiert sein.

Bei besonders vorteilhaften Ausführungsformen ist vorgesehen, dass das Anordnungselement und der Rohrkörper einstückig ausgebildet sind.

Insbesondere weist das Anordnungselement genau eine oder zumindest eine Anschlagsfläche auf und korrespondiert so insbesondere zu einem Halteelement mit zumindest einer korrespondierenden Begrenzungsfläche.

Bei besonders bevorzugten Ausführungsformen ist vorgesehen, dass das Anordnungselement zumindest zwei Anschlagsflächen aufweist, welche insbesondere zumindest näherungsweise parallel zueinander verlaufen. Damit kann durch ein einzelnes Anordnungselement das Spiel in einer Richtung beidseitig mittels korrespondierenden Begrenzungsflächen auf das erlaubte Maß begrenzt werden.

Besonders günstig ist es, wenn das Anordnungselement Anschlagsflächen aufweist, welche schräg, beispielsweise zumindest näherungsweise senkrecht, zueinander verlaufen, so dass in vorteilhafter Weise mit nur diesem einen Anordnungselement das erlaubte Spiel in mehreren Richtungen begrenzt werden kann.

Bei einigen günstigen Ausführungsformen ist vorgesehen, dass der Rohrkörper zumindest teilweise zwischen zwei Begrenzungsflächen, beispielsweise zwei Begrenzungsflächen zweier Halteelemente, angeordnet ist. Damit wird eine besonders stabile Anordnung des Rohrkörpers in diesem Bereich bereitgestellt.

Beispielsweise ist das Halteelement an einer Seite, welche dem Rohrkörper zugewendet ist, im Wesentlichen flach ausgebildet und diese flache Oberfläche bildet eine Begrenzungsfläche für eine korrespondierende Anschlagsfläche des Rohrkörpers.

Bei besonders vorteilhaften Ausführungsformen ist vorgesehen, dass das Halteelement einen Zwischenraum aufweist, welcher insbesondere von zumindest zwei Begrenzungsflächen begrenzt wird.

Insbesondere ist der Zwischenraum in Richtung der Entnahmerichtung geöffnet, weist also insbesondere eine in diese Richtung orientierte Öffnung auf.

Damit weist das Halteelement einen, insbesondere eine Aufnahme für ein Teil der Rohreinheit ausbildenden, Zwischenraum auf und dieser ist fertigungstechnisch leicht herstellbar, da er in Richtung der Entnahmerichtung geöffnet ist und somit beim Spritzgießen des Wannenkörpers jenes Teil der Form, welches den Zwischenraum ausformt in der Entnahmerichtung leicht entnommen werden kann.

In dem eine Aufnahme ausbildenden Zwischenraum kann in konstruktiv einfacher Weise ein entsprechendes Teil der Rohreinheit mit Spiel angeordnet werden und insbesondere ist das entsprechende Teil in der Aufnahme mit Spiel angeordnet.

Bevorzugt ist es, wenn der Zwischenraum bezüglich der Entnahmerichtung keine Hinterschneidung aufweist, also insbesondere Seitenflächen des Zwischenraums in der Entnahmerichtung sich im Wesentlichen eben erstrecken.

Beispielsweise verlaufen sich gegenüberliegende Seitenwände des Zwischenraums im Wesentlichen parallel zueinander oder der Zwischenraum weitet sich in der Entnahmerichtung zu seiner Öffnung hin.

Dabei ist es besonders günstig, wenn ein Eingriffskörper des Anordnungselementes in den Zwischenraum eingreift.

Damit kann zum einen durch die Ausgestaltung des Zwischenraumes und des Eingriffskörpers das erlaubte Spiel wohl definiert werden und zum anderen bietet der Zwischenraum einen stabilen halt für den Eingriffskörper und damit auch für die Rohreinheit.

Bei besonders bevorzugten Ausführungsformen ist vorgesehen, dass der Zwischenraum zumindest zwei Äste aufweist, in welche vorzugsweise jeweils ein Schenkel des entsprechenden Eingriffskörpers eingreifen. Dadurch wird die Anordnung mit Spiel ermöglicht, welche gleichzeitig einen stabilen Halt bietet. Außerdem ist es in günstiger Weise möglich, durch das eine Anordnungselement das erlaubte Spiel in mehreren Richtungen in wohl definierter Weise und stabil zu ermöglichen.

Dabei werden insbesondere die jeweiligen Äste von jeweils mindestens einer Begrenzungsfläche, vorzugsweise von zumindest je zwei Begrenzungsflächen begrenzt.

Vorzugsweise ist der Zwischenraum in Richtung der Vertiefungsrichtung geöffnet, weist also insbesondere eine in diese Richtung orientierte Öffnung, insbesondere eine Einführungsöffnung, auf.

Insbesondere ist die Einführungsöffnung des Zwischenraums dem Eingriffskörper entsprechend ausgebildet.

Damit kann der Eingriffskörper bei der Montage leicht in den Zwischenraum eingeführt werden und somit ist eine kostengünstige Montage der Wanneneinrichtung ermöglicht.

Bei einigen günstigen Ausführungsformen ist vorgesehen, dass ein Deckelelement die Einführungsöffnung, insbesondere im Gebrauch der Wanneneinrichtung, verschließt, vorzugsweise wieder entfernbar verschließt. Damit wird der Eingriffskörper durch das Deckelelement, welches insbesondere eine Begrenzungsfläche aufweist, während des Gebrauchs in dem Zwischenraum gehalten, kann aber für die Wartung und/oder für ein Auswechseln der Rohreinheit, insbesondere des Siebes, wieder in einfacher Weise entnommen werden.

Bei anderen besonders günstigen Ausführungsformen ist vorgesehen, dass der Eingriffskörper mittels einer Schraube, beispielsweise mit Spiel, in dem Zwischenraum gehalten wird.

Vorzugsweise ist dabei vorgesehen, dass die Schraube neben dem Zwischenraum in das Halteelement geschraubt wird und ein Teil des Schraubenkopfs die Einführungsöffnung zumindest teilweise überdeckt. Insbesondere weist dabei der entsprechende Teil des Schraubenkopfs eine Begrenzungsfläche auf. Die Vorteile des einfachen Montierens und für die Wartung und des wieder Entfernens der Rohreinheit sind auch bei dieser Lösung gegeben.

Bei einigen besonders günstigen Ausführungsformen ist vorgesehen, dass zumindest ein Anordnungselement mit einem entsprechenden Halteelement verrastet. Dies ermöglicht eine sichere und zuverlässige Montage, wobei gleichzeitig die verrasteten Elemente stabil mit Spiel zusammengehalten werden und vorzugsweise trotzdem wieder voneinander lösbar sind.

Beispielsweise weist dabei eines der Elemente ein Rastglied auf, welches in eine entsprechende Rastnut des anderen Elementes einrastet.

Besonders günstig ist es dabei, wenn auch die Rastnut Begrenzungsflächen aufweist.

Hinsichtlich der Herstellung und der Materialien der Elemente der Wanneneinrichtung wurden bislang keine näheren Angaben gemacht, außer dass der Wannenkörper im Wesentlichen aus Kunststoff ausgebildet ist und im Spritzgussverfahren hergestellt wird.

Bei einigen Ausführungsformen ist vorgesehen, dass die Rohreinheit, insbesondere der Rohrkörper, aus Metall ausgebildet sind.

Vorzugsweise ist vorgesehen, dass der Rohrkörper aus Kunststoff ausgebildet ist. Besonders günstig ist dabei ein thermoplastischer Kunststoff.

Bei einigen besonders vorteilhaften Ausführungsformen ist vorgesehen, dass der Rohrkörper aus mehreren Teilen ausgebildet ist, welche zusammengefügt, beispielsweise reibgeschweißt, werden.

Besonders bevorzugt ist es, wenn die Anordnungselemente, beispielsweise die Anordnungselemente mit dem Rastglied, an den Rohrkörper angespritzt sind.

Ferner weist die Rohreinheit insbesondere ein Sieb, vorzugsweise an einem Ende des Rohrkörpers, auf.

Beispielsweise ist das Sieb zumindest teilweise aus einem Kunststoff, insbesondere einem thermoplastischen Kunststoff, ausgebildet.

Bei besonders bevorzugten Ausführungsformen umfasst das Sieb Metall, insbesondere Edelstahl.

Bezüglich weiterer vorteilhafter Ausgestaltungen und Materialien bezüglich des Wannenkörpers und der Rohreinheit wird auf die Dokumente DE 10 2004 024 517 A1 und WO 2013/117533 A1 Bezug genommen.

Weitere bevorzugte Merkmale und Vorteile der Erfindung sind Gegenstand der Zeichnungen und der nachstehenden Erläuterungen derselben.

In der Zeichnung zeigen:
- Fig. 1: eine perspektivische Darstellung eines ersten Ausführungsbeispiels einer Wanneneinrichtung mit Wannenkörper und einer einen Rohrkörper umfassenden Rohreinheit;
- Fig. 2: eine Schnittdarstellung im Bereich der Rohreinheit des ersten Ausführungsbeispiels;
- Fig. 3: eine Explosionsdarstellung eines Anordnungselements mit einem Eingriffskörper und eines einen Zwischenraum aufweisenden Halteelementes;
- Fig. 4: eine perspektivische Darstellung eines Deckels für den Zwischenraum;
- Fig. 5: eine Variante des Ausführungsbeispiels, wobei das Anordnungselement mittels einer Schraube an dem Halteelement gehalten wird;
- Fig. 6: ein Teil eines Rohrkörpers mit Anordnungselementen, welche an Halteelementen einrasten, gemäß einem zweiten Ausführungsbeispiel;
- Fig. 7: eine vergrößerte Darstellung des Anordnungselementes und des Halteelementes, welche ineinander einrasten und
- Fig. 8: eine perspektivische Darstellung eines Ansaugteils der Rohreinheit, welches an einem Boden des Wannenkörpers mit einem Halteelement geführt gehalten wird gemäß einem dritten Ausführungsbeispiel.

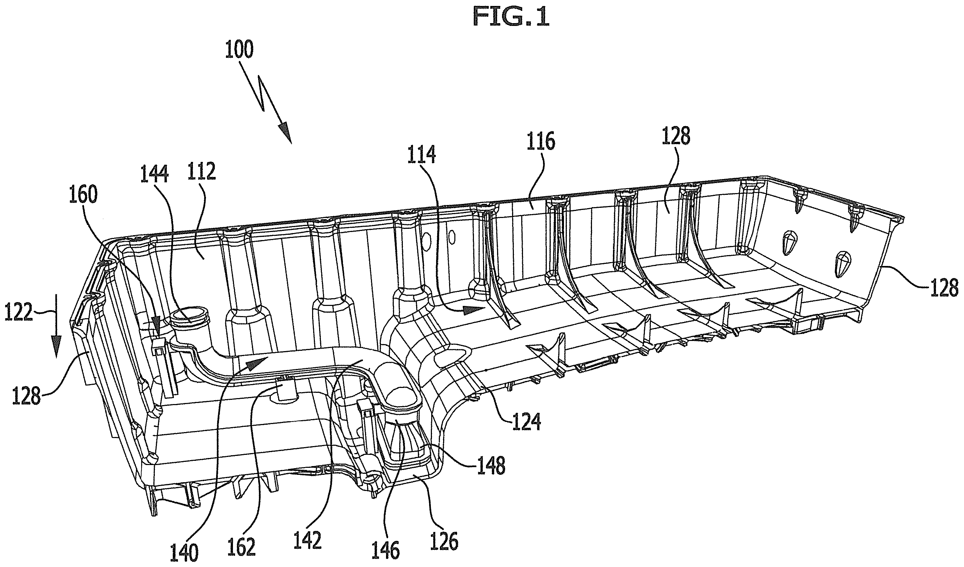

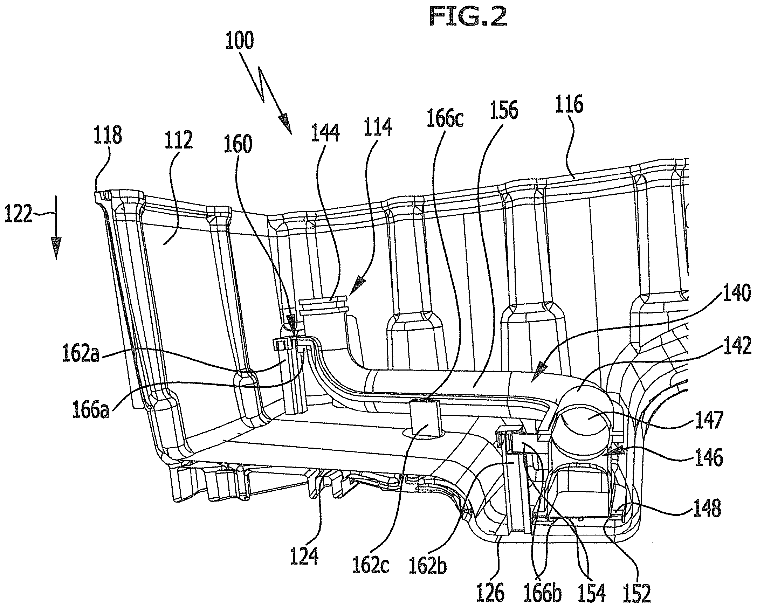

Ein erstes Ausführungsbeispiel einer im Ganzen mit 100 bezeichneten Wanneneinrichtung, welche beispielhaft in den Fig. 1 bis 4 dargestellt ist, umfasst einen Wannenkörper 112 mit einem Wannenraum 114. Insbesondere ist die Wanneneinrichtung 100 für die Ölversorgung eines Verbrennungsmotors vorgesehen und der Wannenkörper 112 eine Motorölwanne.

Ausgehend von einer Wannenöffnung 116, welche vorzugsweise von einem Flansch 118 mit einer Dichtungsnut umrandet wird, erstreckt sich der Wannenraum 114 im Wesentlichen in einer Vertiefungsrichtung 122 in den Wannenkörper 112 hinein bis zu einem Wannenboden 124. Beispielsweise ist der Flansch 118 ein Montierflansch, mit welchem die Wanneneinrichtung 100 an eine mit Öl zu versorgende Einrichtung, insbesondere ein Verbrennungsmotor, montierbar ist.

Bei einem ordnungsgemäßen Gebrauch der Wanneneinrichtung 100 verläuft die Vertiefungsrichtung 122 insbesondere zumindest näherungsweise parallel zur Schwerkraftrichtung, so dass der Wannenboden 124 bezogen auf die Schwerkraftrichtung unterhalb der Wannenöffnung 116 liegt.

Insbesondere umfasst der Wannenraum 114 bezogen auf die Vertiefungsrichtung 122 verschieden tief ausgebildete Bereiche, bei welchen der Abstand des Wannenbodens 124 zur Wannenöffnung 116 verschieden groß ist.

Insbesondere weist der Wannenraum 114 einen bezogen auf die Vertiefungsrichtung 122 am tiefst liegenden Bodenabschnitt 126 auf, bei welchem der Abstand des Bodenabschnitts 126 zur Wannenöffnung 116 am größten ist. Der tiefst liegende Bodenabschnitt 126 ist mit weiteren Bodenabschnitten insbesondere mittels Bodenstufen verbunden.

Quer zur Vertiefungsrichtung 122 ist der Wannenraum 114 durch Seitenwände 128 des Wannenkörpers 112 begrenzt, welche insbesondere sich von der Wannenöffnung 116 bis zu dem Wannenboden 124 erstrecken.

Ferner umfasst die Wanneneinrichtung 100 eine im Ganzen mit 140 bezeichnete Rohreinheit, welche einen Rohrkörper 142 umfasst. Insbesondere ist die Rohreinheit 140 vorgesehen, um Öl aus dem Wannenkörper 112 zu entnehmen. Beispielsweise wird dabei das Öl abgesaugt und der Rohrkörper 142 bildet ein Saugrohr.

Insbesondere erstreckt sich der Rohrkörper 142 zwischen einem ersten Ende 144 und einem zweiten Ende 146.

Das erste Ende 144, welches insbesondere zur Wannenöffnung 116 hin orientiert ist, umfasst eine Rohröffnung und ist vorgesehen zum Anschluss an eine Ölleitung, welche zu der mit Öl zu versorgenden Einrichtung verläuft.

Insbesondere ist in einem montierten Zustand vorgesehen, dass ein Abdichtungssystem eine Verbindung zwischen dem Rohrkörper 142 und der Ölleitung an dem ersten Ende 144 abdichtet. Hierfür umfasst der Rohrkörper 142 an dem ersten Ende 144 beispielsweise eine Nut für einen O-Ring.

Das zweite Ende 146 umfasst eine Rohröffnung, welche in einen Innenraum 147 des Rohrkörpers 142 mündet. Der Innenraum 147 des Rohrkörpers 142 ist, insbesondere über das erste Ende 144, in dem montierten Zustand mit der Ölleitung fluidführend verbunden.

An dem zweiten Ende 146 umfasst die Rohreinheit 140 ein Endteil 148 mit einer Öffnung 152, welche sich insbesondere dem Wannenraum 114 zuwendend weitet und andererseits in den Innenraum 147 des Rohrkörpers 142 mündet. An dem Endteil 148 ist in der Öffnung 152 ein Sieb 154 angeordnet.

Bei diesem Ausführungsbeispiel ist das zweite Ende 146 zum Absaugen von Öl vorgesehen, so dass insbesondere das Endteil 148 ein Absaugteil 148 ist. Durch das Sieb 154 in der Öffnung 152 des Endteils bzw. Absaugteils 148 wird grober Schmutz beim Ansaugen des Öls aufgefangen und somit verhindert, dass dieser grobe Schmutz in die Ölleitung gelangt.

Die Rohreinheit 140 ist mit Spiel an den Wannenkörper 112 angeordnet.

Hierfür ist bei diesem Ausführungsbeispiel eine Halteeinrichtung 160 der Wanneneinrichtung 100 vorgesehen. Die Halteeinrichtung 160 umfasst mehrere Halteelemente 162a, 162b, 162c.

Im Folgenden werden Elemente mit zumindest der grundlegend gleichen Funktion mit dem gleichen Bezugszeichen versehen und nur insoweit Details, in welchen sich die im Wesentlichen gleichen Elemente unterscheiden, beschrieben werden oder aus anderen Gründen auf genau eines dieser im Wesentlichen gleichen Elemente Bezug genommen werden soll, wird dem Bezugszeichen ein Buchstabe als Suffix angehängt, mit welchem dieses genau eine Element bezeichnet wird.

Beispielsweise ist je ein Halteelement 162 an jeweils einem der Enden 144 und 146 mit Spiel an dem Rohrkörper 142 angeordnet. Insbesondere ist vorgesehen, dass ein Halteelement 162 an einem zwischen den Enden 144 und 146 angeordneten Mittelabschnitt 156 des Rohrkörpers 142 an diesen mit Spiel angeordnet ist.

Für die Anordnung des Rohrkörpers 142 an die Halteeinrichtung 160 ist bei diesem Ausführungsbeispiel vorgesehen, dass die Rohreinheit 140 an der Außenseite des Rohrkörpers 142 mehrere Anordnungselemente 166 umfasst, welche insbesondere mit dem Rohrkörper 142 einstückig ausgebildet sind.

Insbesondere ist für jedes der Halteelemente 162a, 162b, 162c je ein korrespondierendes Anordnungselement 166a, 166b, 166c vorgesehen.

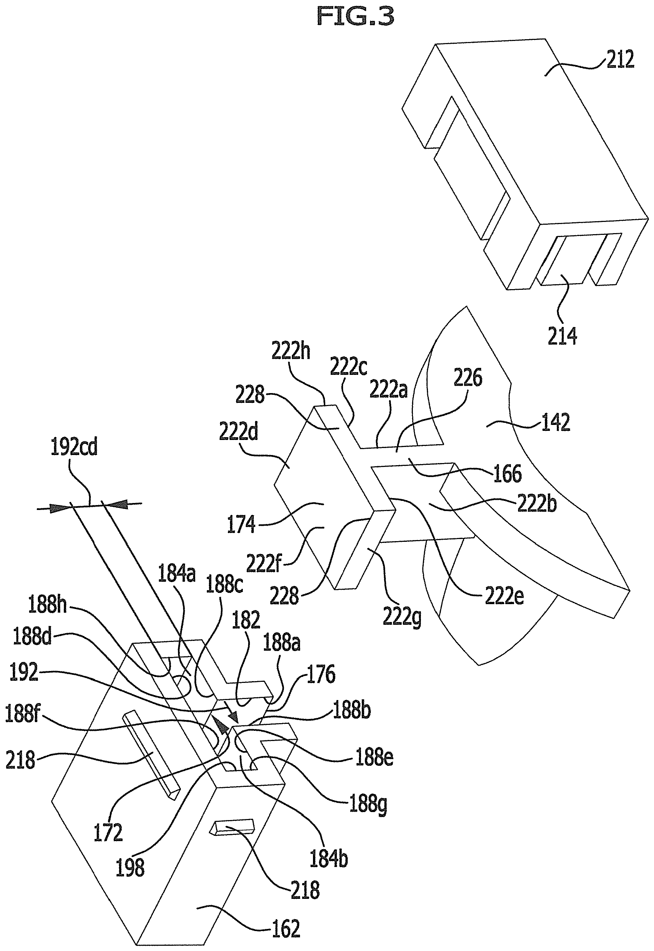

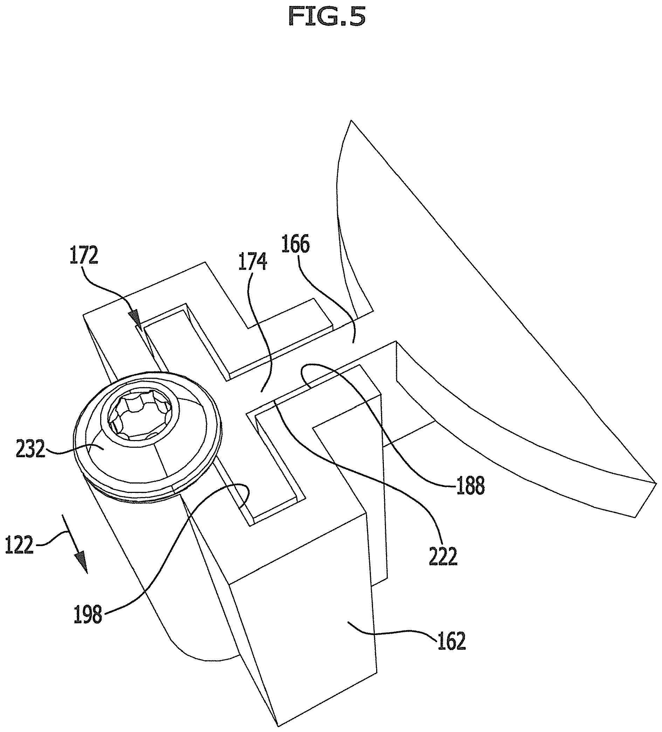

Das Halteelement 162, welches mit einem korrespondierenden Anordnungselement 166 beispielhaft in Fig. 3 und in einer Variante in Fig. 5 dargestellt ist, umfasst einen Zwischenraum 172, in welchen ein Eingriffskörper 174 des Anordnungselementes 166 eingreift.

Dabei ist bei diesem Ausführungsbeispiel der Zwischenraum 172 als eine Nut, insbesondere eine T-Nut 172, ausgebildet.

Der Zwischenraum 172 umfasst eine Aufnahmeöffnung 176, durch welche der Eingriffskörper 174 in den Zwischenraum 172 eingreift.

Ausgehend von der Aufnahmeöffnung 176 verläuft der Zwischenraum 172 in das Halteelement 162 hinein.

Bei diesem Ausführungsbeispiel ist der Zwischenraum 172 verzweigt ausgebildet, wobei sich der Zwischenraum 172 zuerst als Aufnahmeabschnitt 182 von der Aufnahmeöffnung 176 in das Halteelement 162 hineinerstreckt und dann in zwei Äste 184a und 184b teilt. Hierbei erstrecken sich die Äste 184a und 184b von dem Aufnahmeabschnitt 182 ausgehend insbesondere in im Wesentlichen entgegengesetzte Richtungen fort.

Dabei wird der Zwischenraum 172 von von dem Halteelement 162 ausgebildeten Begrenzungsflächen 188 begrenzt. Dabei verlaufen je zwei Begrenzungsflächen 188, beispielsweise die Begrenzungsflächen 188a und 188b sowie 188c und 188d sowie 188e und 188f sowie 188g und 188h, gegenüberliegend zueinander und insbesondere einander entsprechend.

Die Begrenzungsflächen 188 verlaufen insbesondere im Wesentlichen eben, das heißt jeweils im Wesentlichen in einer entsprechenden geometrischen Ebene.

Zwischen je zwei gegenüberliegenden Begrenzungsflächen 188 läuft jeweils ein Teil des Zwischenraums 172, so verläuft etwa zwischen den Begrenzungsflächen 188a und 188b der Aufnahmeabschnitt 182 und zwischen den Begrenzungsflächen 188c und 188d bzw. 188e und 188f jeweils einer der Äste 184. Insbesondere enden die Äste 184 an jeweils einer Begrenzungsfläche 188g bzw. 188h, wobei auch diese Begrenzungsflächen einander gegenüberliegend angeordnet sind.

Die Begrenzungsflächen 188 begrenzen den Zwischenraum 172 jeweils in einer korrespondierenden Begrenzungsrichtung 192, wobei typischerweise die jeweilige Begrenzungsfläche 188 zumindest näherungsweise senkrecht zu der korrespondierenden Begrenzungsrichtung 192 verläuft.

Bei den gegenüberliegenden Begrenzungsflächen 188 verlaufen die jeweiligen korrespondierenden Begrenzungsrichtungen 192 zumindest näherungsweise in der gleichen Richtung.

Ferner weist das Halteelement 162 eine Einführungsöffnung 198 auf, welche ebenso in den Zwischenraum 172 mündet. Diese ist im Wesentlichen entsprechend zu dem Eingriffskörper 174 ausgebildet, so dass bei einer Montage der Wanneneinrichtung 100 der Eingriffskörper 174 durch die Einführungsöffnung 198 in den Zwischenraum 172 eingeführt werden kann.

Hierfür verlaufen die Begrenzungsflächen 188 vorzugsweise zumindest näherungsweise parallel zu der Vertiefungsrichtung 122.

Dabei öffnet die Einführungsöffnung 198 den Zwischenraum 172 in Richtung zu der Wannenöffnung 116 hin.

Insbesondere verlaufen auch die Begrenzungsflächen 188 ausgehend von der Einführungsöffnung 198 in das Halteelement 162 hinein.

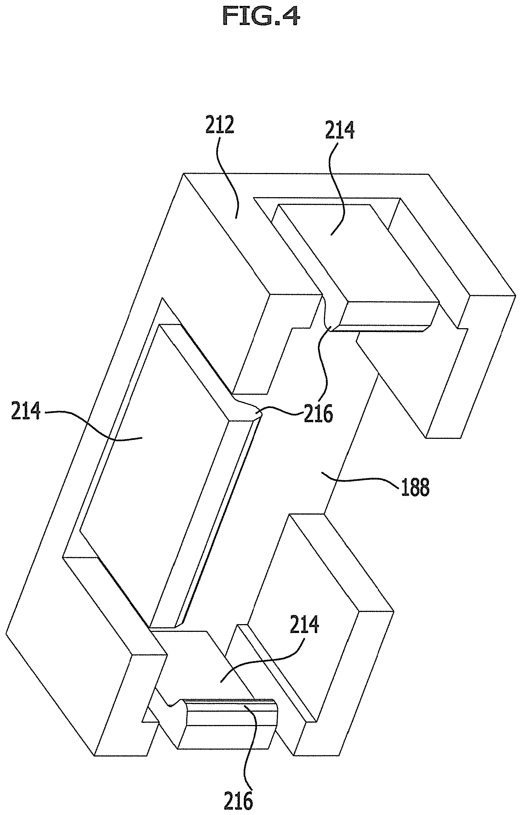

Ferner ist ein Deckelelement 212 vorgesehen, welches über die Einführungsöffnung 198 gestülpt werden kann und beispielhaft in Fig. 4 dargestellt ist.

Insbesondere weist das Deckelelement 212 auf einer Innenseite eine Begrenzungsfläche 188 auf, welche in einem aufgestülpten Zustand des Deckelelementes 212 an der Einführungsöffnung 198 anliegend angeordnet ist und dort den Zwischenraum 172 begrenzt. Insbesondere ist die Begrenzungsfläche 188 des Deckelelements 212 zu einer weiteren Begrenzungsfläche 188, welche etwa an einem Boden des Zwischenraums 172 angeordnet ist, gegenüberliegend.

Beispielsweise ist das Deckelelement 212 mit dem Halteelement 162 einrastbar und damit lösbar verbunden. Hierfür umfasst das Deckelelement 212 bei diesem Ausführungsbeispiel Schenkel 214, welche mit einem Ende an einem Teil des Deckelelements 212 angeordnet sind und deren anderes Ende leicht Schwingbar ausgebildet ist und mit einer Nase 216 versehen ist. Das Halteelement 162 umfasst einen Rastvorsprung 218, hinter welchem die Nase 216 des Schenkels 214 einrastet, wenn das Deckelelement 212 über die Einführungsöffnung 198 gestülpt wird.

Der Eingriffskörper 174 ist im Wesentlichen zu der Form des Zwischenraums 172 korrespondierend ausgebildet, so dass der Eingriffskörper 174 mit Spiel in den Zwischenraum 172 hineinpasst.

Hierbei weist der Eingriffskörper 174 Anschlagsflächen 222 auf, wobei jeweils eine Anschlagsfläche 222a, b, c, d, e, f, g, h zu einer Begrenzungsfläche 188a, b, c, d, e, f, g, h korrespondiert.

Dabei weist der Eingriffskörper 174 ausgehend von einer Anschlagsfläche 222 eine kleinere Ausdehnung auf verglichen mit der korrespondierenden Ausdehnung des Zwischenraums 172 ausgehend von der korrespondierenden Begrenzungsfläche 188 in Richtung der korrespondierenden Begrenzungsrichtung 192.

Also ist bei gegenüberliegenden Begrenzungsflächen 188 eine Ausdehnung des Eingriffskörpers 174 in der entsprechenden Begrenzungsrichtung 192 zwischen den korrespondierenden Anschlagsflächen 222 kleiner als der Abstand der gegenüberliegenden Begrenzungsflächen 188 in der Begrenzungsrichtung 192.

Dabei ist die Ausdehnung des Eingriffskörpers 174 jeweils zumindest näherungsweise um eine Länge kleiner, welche dem Ausmaß des Spiels, welches die Rohreinheit 140 haben soll, entspricht.

Damit ist also insbesondere vorgesehen, dass wenn der Eingriffskörper 174 mit einer Anschlagsfläche 222 an der korrespondierenden Begrenzungsfläche 188 anliegt eine der Anschlagsfläche 222 in der korrespondierenden Begrenzungsrichtung 192 gegenüberliegende Oberfläche des Eingriffskörpers 174, welche insbesondere ebenso eine Anschlagsfläche 222 ist, nicht an eine Begrenzungsfläche des Zwischenraums 172 anliegt sondern von einer entsprechenden Begrenzungsfläche 188 in einem Abstand beabstandet ist, welcher zumindest näherungsweise dem Ausmaß des Spiels entspricht, welches der Angriffskörper 174 haben soll. Voranstehendes gilt, sofern die Rohreinheit 140 in die entsprechende Begrenzungsrichtung 192 ein Spiel haben soll. Soll die Rohreinheit 140 in der entsprechenden Begrenzungsrichtung 192 kein Spiel haben, so liegen die entsprechenden Anschlagsflächen 222 an ihren korrespondierenden Begrenzungsflächen 188 an.

Der Eingriffskörper 174 greift mit einem Eingriffsabschnitt 226 durch die Aufnahmeöffnung 176 in den Zwischenraum 172 ein. Bei diesem Ausführungsbeispiel teilt sich der Eingriffskörper 174 an einem Ende des Eingriffsabschnitts 226 und jeweils zwei Schenkel 228 verlaufen in je einem der Äste 184.

Dabei weist der Eingriffsabschnitt 226 zumindest näherungsweise senkrecht zu der Richtung, in welcher dieser sich durch den Aufnahmeabschnitt 182 erstreckt, eine kleinere Ausdehnung auf als der Aufnahmeabschnitt 182 in dieser Richtung aufweist, wobei die Ausdehnung wiederum zumindest näherungsweise dem Maß des erlaubten Spiels entspricht.

Die Schenkel 228 weisen in der Richtung, in welcher sie sich im Wesentlichen durch den jeweiligen Ast 184 hindurch erstrecken, eine kleinere Ausdehnung auf als der entsprechende Ast 184 in dieser Richtung, wobei die Ausdehnung wiederum zumindest näherungsweise dem erlaubten Spiel entsprechend kleiner ist.

Damit ist die Funktionsweise der Wanneneinrichtung 100 kurz zusammengefasst wie folgt:
Die Rohreinheit 140 ist in dem Wannenkörper 112 mit Spiel angeordnet, wobei die eine Öffnung des Rohrkörpers 142 am ersten Ende 144 zur Wannenöffnung 116 hin orientiert ist. An diese Öffnung ist eine Fluidleitung, beispielsweise eine Ölleitung, anschließbar, wobei durch das erlaubte Spiel der Rohreinheit 140 das Ende 144 des Rohrkörpers 142 in seiner Position leicht bewegbar ist und damit günstig zu dem Anschluss der Ölleitung ausrichtbar ist und an diesen angeschlossen werden kann.

Mit dem anderen Ende 146 mündet der Innenraum 147 des Rohrkörpers 142 in den Wannenraum 114, so dass die Fluidleitung mit dem Wannenraum 114 fluidführend verbunden ist. Insbesondere kann über das zweite Ende 146 ein Fluid, beispielsweise Öl, dem Wannenraum 114 entnommen werden. Hierfür ist das zweite Ende 146 insbesondere im Bereich des tiefst liegenden Bodenabschnitts 126 angeordnet, so dass im Wesentlichen unabhängig von einem Füllstand des Öls bis zu einem Minimalfüllstand in dem Wannenraum 114 das Ende 146 in das in dem Wannenraum 114 bevorratete Fluid hineintaucht und so das Fluid entnehmbar ist.

Die Halteeinrichtung 160, insbesondere durch die Halteelemente 162, hält die Rohreinheit 140 im Wesentlichen in einer Sollposition in dem Wannenraum 114, wobei die Rohreinheit 140 um die Sollposition im Ausmaß des erlaubten Spiels beweglich ist. Hierfür sind die Begrenzungsflächen 188 der Halteeinrichtung 160 von einer Solllage der Anschlagsflächen 222, welche diese einnehmen wenn die Rohreinheit 140 in der Sollposition positioniert ist, beabstandet angeordnet, wobei der Abstand der Begrenzungsflächen 188 von der Solllage der Anschlagsflächen 222 zumindest näherungsweise dem Ausmaß des Spiels entspricht.

Hierbei ist beispielsweise vorgesehen, dass Halteelemente 162 die Rohreinheit 140 im Bereich der Enden 144 und 146 und im Bereich des Mittelabschnitts des Rohrkörpers 142 mit Spiel halten.

Dabei wird bei diesem Ausführungsbeispiel der Rohreinheit 140 sowohl in Richtung der Vertiefungsrichtung 122 als auch senkrecht hierzu ein Spiel ermöglicht.

Bei einer Variante des Ausführungsbeispiels, beispielhaft dargestellt in Fig. 5, ist vorgesehen, dass die Einführungsöffnung 198 nicht durch ein Deckelelement 212 abgedeckt ist, sondern dass ein Bereich der Einführungsöffnung 198 durch eine Schraube 232 bedeckt ist.

Insbesondere ist die Schraube 232 neben dem Zwischenraum 172 in das Halteelement 162 eingeschraubt und ein Bereich eines Schraubenkopfs der Schraube 232 ragt über die Einführungsöffnung 198.

Damit bedeckt ein Teil der Schraube 232 die Einführungsöffnung 198 und hält das Anordnungselement 166, insbesondere den Eingriffskörper 174, wieder lösbar in dem Zwischenraum 172.

Dabei bildet ein Teil der Schraube 232, und zwar jener welcher über die Einführungsöffnung 198 ragt, eine Begrenzungsfläche 188 aus, deren entsprechende Begrenzungsrichtung 192 vorzugsweise zumindest näherungsweise parallel zu der Vertiefungsrichtung 122 verläuft, wobei die Begrenzungsflächen 188 mit ihrer Begrenzungsrichtung 192 in der Fig. 5 nicht eingezeichnet sind, da diese verdeckt sind in dieser Darstellung.

Alle übrigen Teile sind bei dieser Variante wie bei dem ersten Ausführungsbeispiel ausgeführt, so dass bezüglich der Beschreibung derselben vollinhaltlich auf die voranstehende Ausführung verwiesen wird.

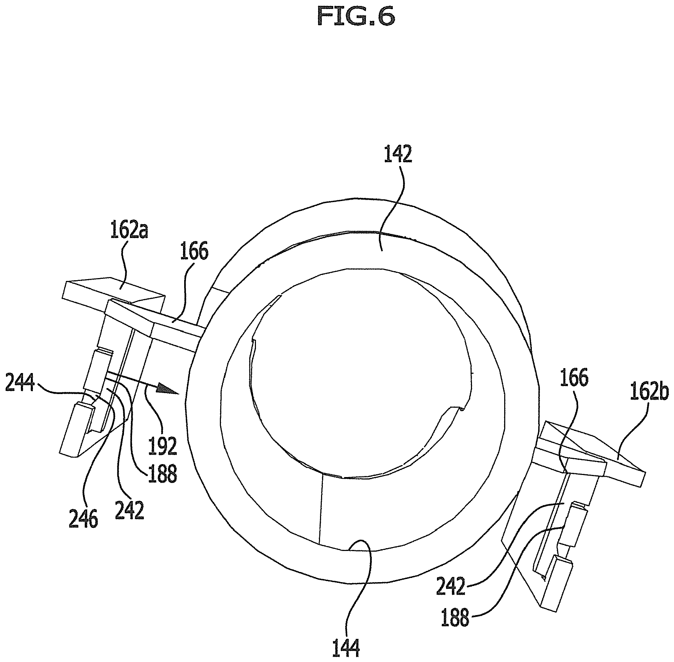

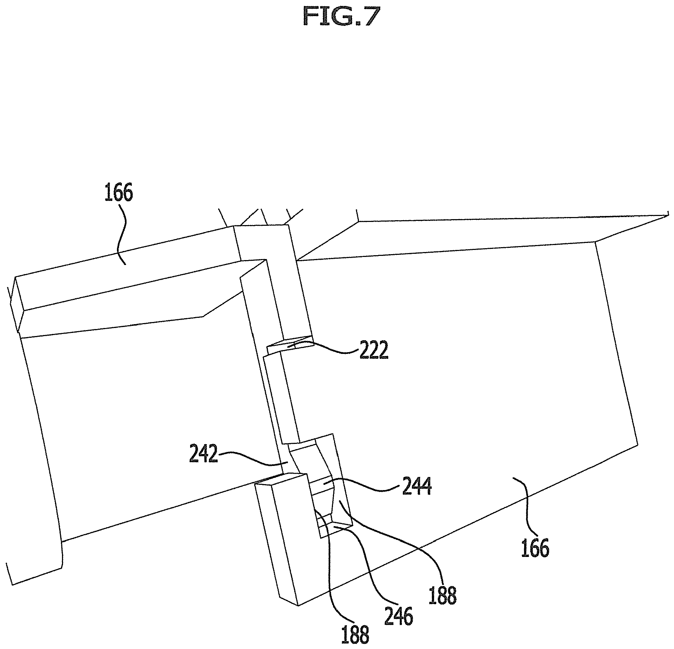

Bei einem zweiten Ausführungsbeispiel, beispielhaft dargestellt in den Fig. 6 und 7, sind jene Elemente, welche Elementen bei dem ersten Ausführungsbeispiel entsprechen, mit den gleichen Bezugszeichen belegt und bezüglich der Beschreibung derselben wird vollinhaltlich auf die Ausführungen zu dem ersten Ausführungsbeispiel verwiesen.

Bei dem zweiten Ausführungsbeispiel ist ein Teil des Rohrkörpers 142, beispielsweise sein erstes Ende 144, zwischen einem Halteelementepaar zweier Halteelemente 162a und 162b angeordnet. Dabei weisen die Halteelemente 162 des Halteelementepaars gegenüberliegende Begrenzungsflächen 188 auf und korrespondierende Anordnungselemente 166 eines korrespondierenden Anordnungselementepaars weisen korrespondierende Anschlagsflächen 222 auf.

Beispielsweise liegen hierbei die Anschlagsflächen 222 an den korrespondierenden Begrenzungsflächen 188 an, wobei in die korrespondierende Begrenzungsrichtung 192 kein Spiel erlaubt sein soll.

Bei einer Variante des Ausführungsbeispiels liegen diese Anschlagsflächen 222 nicht beide gleichzeitig an den korrespondierenden Begrenzungsflächen 188 an, sondern die Begrenzungsflächen 188 sind jeweils mit einem ein Spiel ermöglichenden Abstand von den Solllagen der Anschlagsflächen 222 beabstandet angeordnet, da bei dieser Variante in der entsprechenden Begrenzungsrichtung 192 ein Spiel erlaubt sein soll.

Außerdem ist bei diesem Ausführungsbeispiel vorgesehen, dass das Anordnungselement 166 mit dem Halteelement 162 verrastet.

Hierfür ist vorgesehen, dass das Anordnungselement 166 ein Rastglied 242 mit einer Rastnase 244 umfasst, welche in eine Rastnut 246 des Halteelementes 162 im eingerasteten Zustand eingreift.

Hierfür ist das Rastglied 242 leicht beweglich ausgebildet, so dass beim Einrasten die Rastnase 244 gegenüber einen zur Rastnut 246 hervorstehenden Teil zurückweichen kann und beim endgültigen Einrasten in die Rastnut 246 aus der zurückgewichenen Position in eine eingerastete Position schwenkt.

Insbesondere ist die Rastnase 244 in einer Ausdehnung etwas kleiner als die Rastnut 246 und zwar in einem Ausmaß, welches dem erlaubten Spiel entspricht. Dabei verläuft die Richtung in welcher die Rastnase 244 eine kleinere Ausdehnung aufweist als die Rastnut 246 insbesondere schräg zu der Richtung in welcher die Rastnase 244 in die Rastnut 246 einrastet.

Ferner ist vorzugsweise vorgesehen, dass die Rastnut 246 gegenüberliegende Begrenzungsflächen 188 aufweist, welche mit Anschlagsflächen 222 an der Rastnase 244 korrespondieren und wobei die entsprechende Begrenzungsrichtung 192 zumindest näherungsweise senkrecht zu der Richtung verläuft, in welcher die Rastnase 244 in die Rastnut 246 einrastet.

Im Übrigen sind alle weiteren Teile dieses Ausführungsbeispiels wie bei dem ersten Ausführungsbeispiel und/oder seiner Variante ausgebildet, so dass bezüglich der Beschreibung derselben vollinhaltlich auf die Ausführungen zu dem ersten Ausführungsbeispiel verwiesen wird.

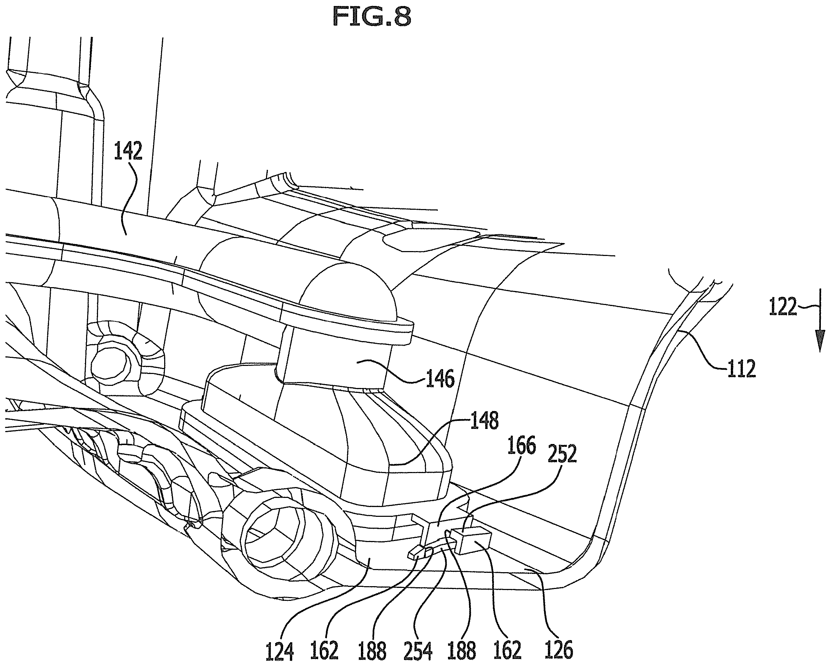

Bei einem dritten Ausführungsbeispiel, welches beispielhaft in Fig. 8 dargestellt ist, werden jene Elemente, welche einem des ersten oder zweiten Ausführungsbeispiels entsprechen, mit dem gleichen Bezugszeichen versehen und bezüglich der Beschreibung derselben wird vollinhaltlich auf die Ausführungen zu diesen Ausführungsbeispielen verwiesen.

Bei dem dritten Ausführungsbeispiel ist vorgesehen, dass ein Halteelement 162 am Wannenboden 124, insbesondere an dem tiefst liegenden Bodenabschnitt 126, angeordnet ist und den Rohrkörper 142, insbesondere sein zweites Ende 146 vorzugsweise an dem Absaugteil 148, mit Spiel hält.

Hierfür ist an der Rohrkörpereinheit 140, insbesondere an dem Absaugteil 148, ein zu dem Halteelement 162 korrespondierendes Anordnungselement 166 vorgesehen.

Insbesondere ist vorgesehen, dass das Ende 146 in zur Vertiefungsrichtung 122 zumindest näherungsweise senkrecht verlaufenden Richtungen mit Spiel gehalten wird und zumindest näherungsweise in Richtung der Vertiefungsrichtung 122 kein Spiel ermöglicht wird.

Beispielsweise weist das Halteelement 162 hierfür einen Kragen 252 auf, welcher bezogen auf die Vertiefungsrichtung 122 eine Leiste 254 des Anordnungselementes 166 überragt und deren Oberfläche sich einander berühren, so dass in Richtung der Vertiefungsrichtung 122 kein Spiel für das Ende 146 ermöglicht wird.

In zur Vertiefungsrichtung 122 zumindest näherungsweise senkrecht verlaufender Richtung ist die Leiste 254 relativ zu dem Kragen 252 verschiebbar, bis ein Endstück der Leiste 254 mit einer Anschlagsfläche 222 an eine korrespondierende Begrenzungsfläche 188 eines Halteelements 162 stößt, wobei dieses Halteelement 162 wiederum derart angeordnet ist, dass seine Begrenzungsflächen 188 von einer Solllage der Anschlagsfläche 222 mit einem dem erlaubten Spiel entsprechenden Abstand angeordnet sind.

Insbesondere führt also das Halteelement 162 mit dem Kragen 252 die Leiste 254 in einer zur Vertiefungsrichtung 122 zumindest näherungsweise senkrecht verlaufenden Richtung. Somit ist dieses Halteelement 162 einer Führung entsprechend ausgebildet.

Im Übrigen sind alle weiteren Teile bei diesem Ausführungsbeispiel wie bei dem ersten oder zweiten Ausführungsbeispiel oder ihren Varianten ausgebildet, so dass bezüglich der Beschreibung derselben vollinhaltlich auf die voranstehenden Ausführungen verwiesen wird.

## Patentansprüche

1. Wanneneinrichtung (100) umfassend einen Wannenkörper (112), insbesondere für eine Ölversorgung in einem Nutzfahrzeug, mit einer einen Rohrkörper (142) umfassenden Rohreinheit (140), wobei der Wannenkörper (112) ein spritzgegossenes Kunststoffteil ist, **dadurch gekennzeichnet , dass** die Rohreinheit (140) mit Spiel an den Wannenkörper (112) angeordnet ist, wobei die Rohreinheit (140) zumindest teilweise in Richtung einer Vertiefungsrichtung (122) des Wannenkörpers (112) mit Spiel angeordnet ist.

2. Wanneneinrichtung (100) nach Anspruch 1, **dadurch gekennzeichnet, dass** eine Sollposition für die Rohreinheit (140) vorgesehen ist und die Rohreinheit (140) mit Spiel in dieser Sollposition angeordnet ist, insbesondere gehalten wird.

3. Wanneneinrichtung (100) nach einem der voranstehenden Ansprüche, **dadurch gekennzeichnet, dass** die Rohreinheit (140) zumindest teilweise in Richtung einer Vertiefungsrichtung (122) des Wannenkörpers (112) mit Spiel gehalten wird.

4. Wanneneinrichtung (100) nach einem der voranstehenden Ansprüche, **dadurch gekennzeichnet, dass** die Rohreinheit (140) zumindest teilweise in zumindest einer zu der Vertiefungsrichtung (122) des Wannenkörpers (112) zumindest näherungsweise senkrecht verlaufenden Richtung mit Spiel angeordnet ist, insbesondere gehalten wird.

5. Wanneneinrichtung (100) nach einem der voranstehenden Ansprüche, **dadurch gekennzeichnet, dass** eine Halteeinrichtung (160), welche insbesondere mehrere Halteelemente (162) umfasst, die Rohreinheit (140) mit Spiel, insbesondere wieder lösbar, hält.

6. Wanneneinrichtung (100) nach einem der voranstehenden Ansprüche, **dadurch gekennzeichnet, dass** die Halteeinrichtung (160) mehrere Begrenzungsflächen (188) aufweist und dass die Rohreinheit (140) zwischen diesen, insbesondere zwischen jeweils zwei Begrenzungsflächen (188), mit Spiel angeordnet ist, insbesondere gehalten wird.

7. Wanneneinrichtung (100) nach einem der voranstehenden Ansprüche, **dadurch gekennzeichnet, dass** die Begrenzungsflächen (188) von einer Solllage einer jeweiligen korrespondierenden Anschlagsfläche (222) der Rohreinheit (140), welche diese einnimmt, wenn die Rohreinheit (140) in der Sollposition positioniert ist, mit einem entsprechenden Abstand beabstandet angeordnet sind, wobei insbesondere der jeweilige Abstand einer entsprechenden maximal erlaubten Auslenkung der Rohreinheit aus der Sollposition entspricht.

8. Wanneneinrichtung (100) nach einem der voranstehenden Ansprüche, **dadurch gekennzeichnet, dass** die Rohreinheit (140) zumindest ein Anordnungselement (166), insbesondere mehrere Anordnungselemente (166), umfasst, wobei insbesondere das eine Anordnungselement (166) oder die mehreren Anordnungselemente (166) an einer Außenseite des Rohrkörpers (142) angeordnet ist/sind.

9. Wanneneinrichtung (100) nach einem der voranstehenden Ansprüche, **dadurch gekennzeichnet, dass** der Rohrkörper (142) zumindest teilweise zwischen zwei Begrenzungsflächen (188) angeordnet ist.

10. Wanneneinrichtung (100) nach einem der voranstehenden Ansprüche, **dadurch gekennzeichnet, dass** ein Eingriffskörper (174) eines Anordnungselementes (166) in einen Zwischenraum (172) eines Halteelementes (162) eingreift, wobei insbesondere der Zwischenraum (172) von zumindest zwei Begrenzungsflächen (188) begrenzt wird.

11. Wanneneinrichtung (100) nach einem der voranstehenden Ansprüche, **dadurch gekennzeichnet, dass** der Zwischenraum (172) oder die Zwischenräume (172) zumindest eines Halteelements (162), insbesondere sämtlicher Halteelemente (162), in Richtung einer Entnahmerichtung und/oder in Richtung der Vertiefungsrichtung (122) geöffnet ist/sind.

12. Wanneneinrichtung (100) nach einem der voranstehenden Ansprüche, **dadurch gekennzeichnet, dass** der Zwischenraum (172) zumindest eines Halteelements (162), insbesondere die Zwischenräume (172) sämtlicher Halteelemente (162), bezüglich der Entnahmerichtung keine Hinterschneidung aufweist/aufweisen.

13. Wanneneinrichtung (100) nach einem der voranstehenden Ansprüche, **dadurch gekennzeichnet, dass** der Zwischenraum (172) zumindest zwei Äste (184) aufweist, welche insbesondere jeweils von zumindest je zwei Begrenzungsflächen (188) begrenzt werden.

14. Wanneneinrichtung (100) nach einem der voranstehenden Ansprüche, **dadurch gekennzeichnet, dass** zumindest ein Anordnungselement (166) mit einem Halteelement (162) verrastet.

## Claims

1. Sump device (100) comprising a sump body (112), in particular for an oil supply in a utility vehicle, having a pipe unit (140) comprising a pipe body (142), the sump body (112) being an injection-molded plastics material part, **characterized in that** the pipe unit (140) is arranged with clearance on the sump body (112), the pipe unit (140) being arranged with clearance at least partially in the direction of a depth direction (122) of the sump body (112).

2. Sump device (100) according to claim 1, **characterized in that** a desired position is provided for the pipe unit (140), and the pipe unit (140) is arranged, in particular held, with clearance in said desired position.

3. Sump device (100) according to either of the preceding claims, **characterized in that** the pipe unit (140) is held with clearance at least partially in the direction of a depth direction (122) of the sump body (112).

4. Sump device (100) according to any of the preceding claims, **characterized in that** the pipe unit (140) is arranged, in particular held, with clearance at least partially in at least one direction which extends at least approximately perpendicularly to the depth direction (122) of the sump body (112).

5. Sump device (100) according to any of the preceding claims, **characterized in that** a holding device (160), which in particular comprises a plurality of holding elements (162), holds the pipe unit (140) with clearance, in particular in a releasable manner.

6. Sump device (100) according to any of the preceding claims, **characterized in that** the holding device (160) has a plurality of boundary surfaces (188) **and in that** the pipe unit (140) is arranged, in particular held, with clearance between said boundary surfaces, in particular between in each case two boundary surfaces (188).

7. Sump device (100) according to any of the preceding claims, **characterized in that** the boundary surfaces (188) are arranged at a corresponding distance from a desired position of a relevant corresponding stop surface (222) of the pipe unit (140), which said pipe unit occupies when the pipe unit (140) is positioned in the desired position, the relevant distance corresponding in particular to a corresponding maximum permitted deflection of the pipe unit from the desired position.

8. Sump device (100) according to any of the preceding claims, **characterized in that** the pipe unit (140) comprises at least one arrangement element (166), in particular a plurality of arrangement elements (166), in particular the one arrangement element (166) or the plurality of arrangement elements (166) being arranged on an outer side of the pipe body (142).

9. Sump device (100) according to any of the preceding claims, **characterized in that** the pipe body (142) is arranged at least partially between two boundary surfaces (188).

10. Sump device (100) according to any of the preceding claims, **characterized in that** an engagement body (174) of an arrangement element (166) engages in an intermediate space (172) of a holding element (162), in particular the intermediate space (172) being bounded by at least two boundary surfaces (188).

11. Sump device (100) according to any of the preceding claims, **characterized in that** the intermediate space (172) or the intermediate spaces (172) of at least one holding element (162), in particular of all holding elements (162), is/are open in the direction of a removal direction and/or in the direction of the depth direction (122).

12. Sump device (100) according to any of the preceding claims, **characterized in that** the intermediate space (172) of at least one holding element (162), in particular the intermediate spaces (172) of all holding elements (162), has/have no undercut with respect to the removal direction.

13. Sump device (100) according to any of the preceding claims, **characterized in that** the intermediate space (172) has at least two branches (184), which in particular are each bounded by at least two boundary surfaces (188).

14. Sump device (100) according to any of the preceding claims, **characterized in that** at least one arrangement element (166) interlocks with a holding element (162).

## Revendications

1. Système de cuve (100) comprenant un corps de cuve (112), en particulier pour une alimentation en huile dans un véhicule utilitaire, comportant une unité formant tube (140) comprenant un corps tubulaire (142), le corps de cuve (112) étant une pièce en matière plastique moulée par injection, **caractérisé en ce que** l'unité formant tube (140) est disposée avec un certain jeu sur le corps de cuve (112), l'unité formant tube (140) étant disposée avec un jeu au moins partiellement dans une direction d'évidement (122) du corps de cuve (112).

2. Système de cuve (100) selon la revendication 1, **caractérisé en ce qu**'une position de consigne est prévue pour l'unité formant tube (140) et l'unité formant tube (140) est disposée avec un certain jeu, en particulier maintenue, dans cette position de consigne.

3. Système de cuve (100) selon l'une des revendications précédentes, **caractérisé en ce que** l'unité formant tube (140) est maintenue avec un certain jeu au moins partiellement dans une direction d'évidement (122) du corps de cuve (112).

4. Système de cuve (100) selon l'une des revendications précédentes, **caractérisé en ce que** l'unité formant tube (140) est disposée, en particulier maintenue, avec un certain jeu au moins partiellement dans au moins une direction au moins approximativement perpendiculaire à la direction d'évidement (122) du corps de cuve (112).

5. Système de cuve (100) selon l'une des revendications précédentes, **caractérisé en ce qu**'un dispositif de retenue (160), qui comprend en particulier plusieurs éléments de retenue (162), maintient l'unité formant tube (140) avec un certain jeu, en particulier de manière amovible.

6. Système de cuve (100) selon l'une des revendications précédentes, **caractérisé en ce que** le dispositif de retenue (160) présente plusieurs surfaces de délimitation (188) **et en ce que** l'unité formant tube (140) est disposée, en particulier maintenue, avec un certain jeu entre celles-ci, en particulier entre deux surfaces de délimitation (188) respectives.

7. Système de cuve (100) selon l'une des revendications précédentes, **caractérisé en ce que** les surfaces de délimitation (188) sont disposées à une distance correspondante d'une position de consigne d'une surface de butée (222) correspondante respective de l'unité formant tube (140), position que ladite surface de butée occupe lorsque l'unité formant tube (140) est positionnée dans la position de consigne, la distance respective correspondant en particulier à une déviation maximale autorisée correspondante de l'unité formant tube à partir de la position de consigne.

8. Système de cuve (100) selon l'une des revendications précédentes, **caractérisé en ce que** l'unité formant tube (140) comprend au moins un élément d'agencement (166), en particulier plusieurs éléments d'agencement (166), en particulier l'élément d'agencement (166) ou les plusieurs éléments d'agencement (166) étant disposés sur un côté extérieur du corps tubulaire (142).

9. Système de cuve (100) selon l'une des revendications précédentes, **caractérisé en ce que** le corps tubulaire (142) est disposé au moins partiellement entre deux surfaces de délimitation (188).

10. Système de cuve (100) selon l'une des revendications précédentes, **caractérisé en ce qu**'un corps d'engrènement (174) d'un élément d'agencement (166) s'engrène dans un espace intermédiaire (172) d'un élément de retenue (162), l'espace intermédiaire (172) étant en particulier délimité par au moins deux surfaces de délimitation (188).

11. Système de cuve (100) selon l'une des revendications précédentes, **caractérisé en ce que** l'espace intermédiaire (172) ou les espaces intermédiaires (172) d'au moins un élément de retenue (162), en particulier de tous les éléments de retenue (162), est/sont ouvert(s) dans une direction de sortie et/ou dans la direction d'évidement (122).

12. Système de cuve (100) selon l'une des revendications précédentes, **caractérisé en ce que** l'espace intermédiaire (172) d'au moins un élément de retenue (162), en particulier les espaces intermédiaires (172) de tous les éléments de retenue (162), ne présente/présentent aucune contre-dépouille par rapport à la direction de sortie.

13. Système de cuve (100) selon l'une des revendications précédentes, **caractérisé en ce que** l'espace intermédiaire (172) présente au moins deux branches (184), qui sont en particulier délimitées chacune par au moins deux surfaces de délimitation (188).

14. Système de cuve (100) selon l'une des revendications précédentes, **caractérisé en ce qu**'au moins un élément d'agencement (166) est encliqueté avec un élément de retenue (162).
